# EUROPEAN PATENT APPLICATION

(11) **EP 3 669 663 A1**
(43) Date of publication of application: **24.06.2020**
(21) Application number: 18212958.5
(22) Date of filing: 17.12.2018
(51) Int. Cl.: A23K 40/10, A23K 50/10, A23K 20/132, A23K 20/105

(54) **NOVEL BEADLETS**

(71) Applicant: DSM IP Assets B.V., 6411 TE Heerlen (NL)
(72) Inventor: The designation of the inventor has not yet been filed
(74) Representative: Berg, Katja

(57) **Abstract**

The present invention relates to a process of production of beadlets comprising propandiol mononitrate or a derivative thereof in a matrix material, which comprises at least one starch derivative, to such beadlets and to the use of such beadlets.

## Description

The present invention relates to a process of production of beadlets comprising propandiol mononitrate or a derivative thereof in a matrix material, which comprises at least one starch derivative, to such beadlets and to the use of such beadlets.

The temperature of the air surrounding the earth is increasing, a process referred to as global warming. One of the main focuses to reduce this warming effect is to reduce the amount of greenhouse gases emitted into the atmosphere. Greenhouse gases are emitted from several different sources, both natural and artificial; however, the two sources with the most emphasis are the agricultural and fossil fuel industries. Within agriculture, ruminants and in particular cattle are the major contributors to the biogenic methane formation, and it has been estimated that the prevention of methane formation from ruminants would almost stabilize atmospheric methane concentrations.

1,3-Propandiol mononitrate (in the following referred to propandiol mononitrate, respectively PDMN) and derivatives thereof have been reported to be highly efficient in reducing the formation of methane in ruminants without affecting microbial fermentation in a way that would be detrimental to the animal (WO2012/084629).

However, propandiol mononitrate and derivatives thereof when incorporated into standard carrier systems commonly used in the feed industry have been found not to be effectively retained under conventional storage conditions in mineral feed. The lack of retention of the active is, however, highly unwanted as accordingly an appropriate dosage is not possible without undue burden, i.e. sophisticated packaging, analysis of the active content before use or overdosing. Moreover, all these methods add significant additional costs-in-use which are not readily accepted by the end user.

Thus, there is an ongoing need for product forms and methods, which overcome the above-mentioned problems by enabling long-term storage without significant losses of the active, i.e. of propandiol mononitrate respectively a derivative thereof. Furthermore, such a product form should allow the incorporation of relatively high amounts of the active which is so far very difficult and limited to a maximum of about 10 wt.-% (in the form of silica adsorbates).

Surprisingly, it has now been found that relatively high amounts (up to 30 wt.-%) of propandiol mononitrate can be incorporated into beadlets comprising starch and/ or starch derivatives as matrix material, which beadlets in addition exhibit a significantly improved storage stability of the active in the product form as such but even more pronounced after incorporation into a mineral premix.

Thus, the beadlets according to the present invention comprise at least propandiol mononitrate or a derivative thereof (active) and at least one starch and/or at least one starch derivative as a matrix material. Furthermore, these beadlets are preferably coated with a layer of the powder catch medium.

Accordingly, in one embodiment, the present invention relates to beadlets (I), which comprise
(i) 1 to 30 wt-%, based on the total weight of the beadlets, of at least one compound of formula (I) 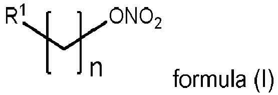 wherein
   n is an integer from 1 to 15
   R1 is selected from the group consisting of H, C₁-C₆alkyl, phenyl, -OH, -NH₂,-CN, -COOH, -O(C=O)R⁸, -NHC(=O)R⁸, SO₂NHR⁸, and -ONO₂, and
   R⁸ is C₁-C₆alkyl, phenyl, pyridyl such as preferably 2-pyridyl
   with the proviso that when n is > 3 the hydrocarbon chain may be interrupted by -O or NH ,and
(ii) 30 to 98 wt-%, based on the total weight of the beadlets, of at least one starch derivative and
(iii) 1 to 60 wt.-%, based on the total weight of the beadlets, of a powder coating.

The term 'beadlets' as used herein is well known to a person skilled in the art and refers to dried solutions, suspensions or emulsions prepared by using a powder catch process. The beadlets are generally in the form of spherical or spheroidal particles comprised of the solidified matrix material entrapping the active(s) and are optionally coated with a layer of the powder catch medium. The principle of the powder catch process is known from the prior art. It can be found for example in US6444227 or WO04062382. These references are hereby incorporated by reference.

The beadlets according to the present invention generally have an average particle size D(v, 0.5) > 200 µm. More preferably the particle size of the silica is selected in the range from 200 µm to 1000 µm, most preferably in the range from 250 µm to 850 µm. The sizes can however be smaller or larger. The size of the beadlets can be determined according to well-known methods, such as (scanning) electron microscopy.

The beadlets according to the present invention preferably have a moisture content of less than 10 wt.-%, more preferably of less than 6 wt.-%, most preferably between about 0.5 to 6 wt.-%. The moisture content of the beadlets can be adjusted by various methods in the art, e.g. by adjusting the powder catch process accordingly or by exposing the thus obtained beadlets to a post-drying step e.g. by exposing them to air at room temperature or by moderate heating in a drying oven at 37°C to 45°C.

In a second embodiment, the present invention relates to a process for preparing beadlets according to the present invention.

Thus, the invention also relates to a process for preparing beadlets, which beadlets comprise at least one a compound of formula (I) 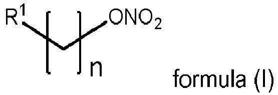 wherein
n is an integer from 1 to 15
R1 is selected from the group consisting of H, C₁-C₆alkyl, phenyl, -OH, -NH₂, -CN, -COOH, -O(C=O)R⁸, -NHC(=O)R⁸, SO₂NHR⁸, and -ONO₂, and
R⁸ is C₁-C₆alkyl, phenyl, pyridyl such as preferably 2-pyridyl with the proviso that when n is > 3 the hydrocarbon chain may be interrupted by-O or NH,
said process comprising the step of:
(a) forming a solution of
   (i) at least one compound of formula (I) and
   (ii) at least one starch derivative, followed by
(b) converting the solution into a dry powder by spraying the solution into a collecting powder.

The solution is formed with water as solvent (aqueous solution). Water-miscible cosolvents can be used to improve solubility of (i) and/ or (ii). A particularly suitable cosolvent according to the present invention is propylene glycol

Most preferably the solution is formed by using water (as sole solvent) as this leads to very homogeneous, non-porous beadlets.

The amount of the compound of formula (I) in the aqueous solution is preferably at least 5 wt.-%, more preferably at least 7.5 wt.-%, most preferably at least 10 wt.-%. Even more preferably the solution contains the compound of formula (I) in an amount selected in the range from 5 to 35 wt.-%, more preferably in the range from 10 to 30 wt.-%, most preferably in the range from 15 to 25 wt.-%, such as in the range from 20 to 25 wt.-% based on the total weight of the aqueous solution.

The amount (total) of the at least one starch derivative in the aqueous solution is preferably selected in the range from 20 to 80 wt.-%, more preferably in the range from 30 to 75 wt.-%, most preferably in the range from 40 to 65 wt.-%.

The compounds of formula (I) are known and either commercially available or can be prepared in analogy to the processes as e.g. disclosed in WO2012/084629.

In all embodiments of the present invention, the compounds of formula (I) preferably have a boiling point below 250°C at 760 Torr, more preferably the compounds of formula (I) have a boiling point in the range from 100 and 200°C at 760Torr as then they are particularly susceptible to a storage instability.

Particular advantageous compounds of formula (I) according to the present invention are the compounds wherein n is an integer between 3 and 9 and R¹ is OH, COOH or -ONO₂ and with the proviso that if n is 4 the hydrocarbon chain may be interrupted by -NH-such as in particular the compounds of formula R¹-(CH₂)₂-NH-(CH₂)₂-ONO₂. Even more preferred are compounds of formula (I) wherein n is an integer between 3 and 9 and R¹ is OH, COOH or -ONO₂.

Even more advantageous compounds of formula (I) according to the present invention are propandiol mononitrate (CAS-No: 100502-66-7), 9-nitrooxynonanol, 5-nitroxy pentanoic acid (CAS 74754-56-6), 6-nitroxy hexanoic acid (CAS 74754-55-5), bis(2-hydroxyethyl)amine dinitrate (CAS 20830-49-3), 1,4-bis-nitrooxybutane (CAS 3457-91-8) and 1,5-bis-nitrooxypentane (CAS 3457-92-9). The most preferred compound of formula (I) to be used in the powderous formulations according to the present invention is propandiol mononitrate.

The at least one compound of formula (I) are formulated into a beadlet by using a matrix material (component (ii)), which matrix material comprises at least one starch derivative.

Starch derivatives are well known to a person skilled in the art and are generally prepared by physical, chemical or enzymatic modification of native starch.

Typical starch derivatives suitable for the purpose of the present invention encompass pregelatinized starches, modified starches and dextrins as well as mixtures thereof.

Pregelatinised starches are examples of physically modified starches.

Acidic modified, oxidized, cross-linked, starch esters, starch ethers and cationic starches are examples of chemically modified starches. Important examples of such modified starches are octenyl succinic anhydride starches (OSA starches). OSA-starches are commercially available e.g. from National Starch under the trade names HiCap 100, Capsul, Capsul HS, Purity Gum 2000, Purity Gum Ultra, UNIPURE, HYLON VII; from Roquette Freres; from Cerestar under the trade name C*EmCap or from Tate & Lyle. OSA starches are usually produced from waxy maize starch.

Dextrins like maltodextrin or yellow dextrin are examples of starch derivatives obtained by partial hydrolysis.

Maltodextrin consists of D-glucose units connected in chains of variable length. The glucose units are primarily linked with α(1→4) glycosidic bonds. Maltodextrin is typically composed of a mixture of chains that vary from three to 17 glucose units long. Maltodextrins are usually characterized by their Dextrose equivalent (DE). DE is a measure of the amount of reducing sugars present in a sugar product, expressed as a percentage on a dry basis relative to dextrose. The dextrose equivalent gives an indication of the average degree of polymerization. Particularly suitable maltodextrins are maltodextrins having a DE in the range from 1 to 50, preferably in the range from 2 to 40, most preferably in the range from 5 to 35 such as e.g. in the range from 5 to 10 (Maltodextrin 0508) or in the range from 25 to 35 (Maltodextrin 2831) as well as mixtures thereof. A particular advantageous maltodextrin in all embodiments of the present invention is a maltodextrin having a DE in the range from 5 to 10 as this allows the preparation of beadlets exhibiting a high content of the compound of formula (I).

Preferably, in all embodiments of the present invention the at least one starch derivative is chosen from the group consisting of OSA starch, maltodextrin and pregelatinised starches as well as mixtures thereof.

Particularly preferred in all embodiments of the present invention is the use of OSA starch, preferably in combination with maltodextrin.

Most preferably, the at least one starch derivative used according to the present invention is a mixture consisting only of OSA starch and maltodextrin.

The weight-ratio (w/w) of the OSA starch to maltodextrin is preferably selected in the range from 5:1 to 1:5, more preferably in the range of 2:1 to 1: 2, most preferably in the range of about 1:1.

The matrix of the beadlets of the present invention can also comprise additional compounds, such as sugars, or sugar alcohols. Sugar refers to any monosaccharide, disaccharide or small oligosaccharide such as sorbitol or sucrose.

The matrix of the beadlets may also comprise further excipients, such as plasticizers, fillers, crosslinking agents or antioxidants.

In one preferred embodiment, next to the at least one starch derivatives the beadlets according to the present invention contain no further matrix material(s).

Because of the powder catch process, used for the drying of the beadlets, the solidified beadlets are generally covered by a layer of the powder catch medium (component (iii)). This layer (coating) is in the form of a powder coating around the solidified matrix material (component (ii)) entrapping the at least one compound of formula (I) (component (i)).

It is well understood, that the powder catch media generally have a particle size which is significantly smaller than the particle size of the beadlets. Suitable particles sizes are dependent on the final beadlet sizes but are generally selected in the range from ≤100 µm, such as in the range from 0.5 µm to 100 µm.

The powder catch medium is a compound (or a mixture of compounds), which is able to absorb moisture and to form a powder coating. Suitable powder catch media are well known to a person skilled in the art and encompass native starches, silica (silicone dioxide), silicates or phosphates. Preferred powder catch media according to the present invention are native starches (in particular corn starch), silica (silicone dioxide), silicates such as in particular aluminium silicate, calcium silicate,calcium aluminum silicate, magnesium oxide, stearic acid, calcium stearate, magnesium stearate, hydrophilic silicic acid and kaolin and tri-calcium phosphate as well as mixtures thereof.

A particular suitable powder catch media according to the present invention is native starch i.e. starch which is obtained from agricultural raw materials such as from corn, sorghum, wheat, rice, tapioca, arrowroot, sago, potato, quinoa and amaranth by physical extraction, purification and drying of starch milk to obtain a (starch) powder. It is well understood that the term native starch as used herein does not encompass starches which have been chemically modified (i.e. starch derivatives).

The extraction of native starch from plants is well known and encompasses in a first step the physical separation of the components of the plants, i.e. starch, protein, cellulose envelope, soluble fractions etc. by crushing, sifting, centrifuging, purifying etc. In a second stage the starch which has been extracted in its pure form is dried to yield the native starch (with an appearance similar to that of flour).

Preferably in all embodiments of the present invention the native starch used as powder coating according to the present invention is derived from potatoes, wheat or maize as well as mixtures thereof, most preferably from maize (maize starch/ corn starch).

Commercially available starch grades suitable for the purpose of the present invention are e.g. commercially available at COOP, Switzerland under the tradename Maizena (maize starch).

Another particular suitable powder catch media (i.e. collecting powder which forms the powder coating) according to the present is silica having a particle size of less than 100 µm (as measured by Laser diffraction following ISO 13320) such as e.g. Sipernat 50 from Evonik.

The most preferred powder catch media (i.e. collecting powder) and accordingly the powder coatings in all embodiments of the present invention is native starch such as in particular (native) corn starch, optionally respectively preferably in admixture with silica.

An important advantage of the beadlets according to the present invention is that they are not dusty and that they posses excellent free flowing characteristics, which are very desirable for manufacturing and formulating operations.

The process according to the present invention surprisingly allows producing beadlets with relatively high amounts of at least one compound of formula (I) with good overall properties. Furthermore, the obtained beadlets exhibit a high retention of the compound of formula (I) in the beadlet itself but also and when admixed into a mineral premix.

The process as described in the present patent application can be used to produce beadlets with an amount the compound of formula (I) adjusted to the needs of the feed industry. The amount can be as low as 0.5 wt-%, based on the total weight of the beadlets. Usually, however, the content of the compound of formula (I) in the beadlets according to the present invention is comprised between 5 and 30 wt.%, preferably between 8 and 30 wt.%, most preferably between 10 to 25 wt.-%, based on the total weight of the beadlets.

A further preferred process according to present invention relates to a process wherein the beadlets comprise at least 30 wt-%, based on the total weight of the beadlets, more preferred at least 40, most preferably at least 50 wt-%, such as at least 60 wt.-% of at least one starch derivative (total) and of the powder coating layer.

Thus, in a particular embodiment, the present invention relates to beadlets (I), which are beadlets (II), which comprise
(i) 5 to 30 wt-%, preferably 8 to 30 wt-%, more preferably 10 to 25 wt-%, based on the total weight of the beadlets, of at least one compound of formula (I), and
(ii) 30 to 95 wt-%, preferably 40 to 90 wt-%, more preferably 50 to 85 wt-%, based on the total weight of the beadlets, of at least one starch and/or at least one starch derivative, and
(iii) 0.5 to 50 wt-%, preferably 0.5 to 30 wt-%, more preferably 5 to 25 wt.-%, based on the total weight of the beadlets, of a powder coating.

In a particularly preferred embodiment, the starch component (ii) always comprise OSA starch and at least one further starch derivate, preferably maltodextrin. Most preferably in all embodiments according to the present invention the at least one starch derivative (ii) consists essentially of OSA starch and maltodextrin.

In a particularly preferred embodiment, the powder coating component (iii) is chosen from the group consisting of native starches (preferably (native) corn starch) and/ or silica. Most preferably in all embodiments of the present invention the powder coating is a mixture of corn starch and silica.

In a very particular embodiment, the present invention relates to beadlets (I), which are beadlets (III), which comprise
(i) 5 to 30 wt-%, preferably 8 to 30 wt-%, more preferably 10 to 25 wt-%, based on the total weight of the beadlets, of propandiol mononitrate, and
(ii) at least 30 to 95 wt-%, preferably 40 to 90 wt-%, more preferably 50 to 85 wt-%, based on the total weight of the beadlets, of a mixture of OSA starch and maltodextrin, and
(iii) 0.5 to 50 wt-%, preferably 0.5 to 30 wt-%, more preferably 5 to 25 wt.-%, based on the total weight of the beadlets, of powder coating chosen from the group consisting of native starches (preferably corn starch) and/ or silica.

The beadlets according to the present invention can comprise further auxiliary agents (auxiliaries). Depending for what the beadlets are used, the auxiliary agent(s) can vary. These auxiliary agents can be useful for the formulation by further improving its properties, such as physical stability, storage stability, visual perception, etc. Auxiliaries can also be useful for the application in the food or feed product by improving the property of these compositions, physical stability, storage stability, visual perception, controlled release in the GI-tract, pH control, oxidation resistant, etc. The concentration of these auxiliaries can vary, depending on the use of these auxiliaries. These auxiliary agents are usually present in an amount of 0 wt-% to 5 wt-%, based on the total weight of the beadlets.

In a preferred embodiment, however, the ingredients (i.e. the components (i), (ii), (iii) listed herein) sum up to 100 wt.-%, i.e. the beadlets consist essentially of the components (i) to (iii). It can, however, not be excluded that small amount of impurities or water (moisture) may be present in the beadlets according to the present invention such as e.g. in amounts of less than 7 wt.-%, preferably less than 5 wt.-%, more preferably less than 3 wt.-%, which impurities/ water (moisture) are introduced via the respective raw materials or processes used and which are not added separately.

Thus, in a preferred embodiment, the beadlets according to the present invention consist essentially of (i) a compound of formula (I), (ii) at least one starch derivative and (iii) a powder coating.

In a particular advantageous embodiment, the beadlets according to the present invention consist essentially of (i) propandiol mononitrate, (ii) OSA starch and maltodextrin and (iii) a powder coating selected from the group of corn starch and silica.

Most preferred beadlets according to the present invention are beadlets (I) which are beadlets (IV) consisting essentially of
(i) 5 to 30 wt-%, preferably 10 to 25 wt-%, based on the total weight of the beadlets, of propandiol mononitrate, and
(ii) 50 to 90 wt-%, preferably 60 to 85 wt-%, based on the total weight of the beadlets, of OSA starch and maltodextrin and,
(iii) 0.5 to 25 wt-%, preferably 5 to 20 wt-%, based on the total weight of the beadlets, of powder coating chosen from the group consisting of starches (preferably corn starch) and silica as well as mixtures thereof.

A further embodiment of the present invention relates to a process for preparing beadlets, which comprise at least one compound of formula (I) comprising:
(a) forming an aqueous solution of
   (i) at least one compound of formula (I) with all the definitions and preferences as given herein and
   (ii) at least one starch derivative with all the definitions and preferences as given herein, followed by
(b) converting the aqueous solution into a dry powder by spray drying into a collecting powder with all the definitions and preferences as given herein.

Preferable the amount of the compound of formula (I) in the aqueous solution is at least 5 wt.-%, more preferably at least 7.5 wt.-%, most preferably at least 10 wt.-%. Even more preferably the aqueous solution contains the compound of formula (I) in an amount selected in the range from 5 to 35 wt.-%, more preferably in the range from 10 to 30 wt.-%, most preferably in the range from 15 to 25 wt.-%, based on the total weight of the aqueous solution.

Preferably, the amount (total) of the at least one starch derivative in the aqueous solution is selected in the range from 20 to 80 wt.-%, more preferably in the range from 30 to 75 wt.-%, most preferably in the range from 40 to 65 wt.-%.

A further embodiment according to the present invention relates to the use of the beadlets according to the present invention such as in particular the beadlets (I), (II), (III) and (IV) in feed products, preferably for ruminants, such as especially for cows, in particular dairy cows, beef cattle and grazing cows.

Therefore, a further embodiment of the present invention relates to a feed product comprising the beadlets as described herein.

Feed products in the context of the present comprise liquid and solid food products as well as paste-like and or gel like.

Feed products in the context of the present further comprise feed products in form of pellets or tablets.

The beadlets according to the present invention can also be administered via a bolus.

A preferred embodiment of the present invention relates to the use of the beadlets according to the present invention for the use in premixes (especially for cows), such as in particular in mineral premixes.

The term 'premix' as used herein designates a preferably uniform mixture of the listed ingredients which are generally used to facilitate uniform dispersion of active ingredients into a larger mix.

The term 'mineral premix' indicates that the premix predominantly consists of minerals, such as in particular micro and macro minerals.

As mineral premixes are particularly preferred, the invention relates in a further embodiment to a premix, consisting essentially of
(a1) at least 5 wt.-%, preferably from 5 to 20 wt.-%, most preferably from 10 to 15 wt.-%, based on the total weight of the premix, of a beadlet according to the present invention, such as in particular a beadlet (I), (II), (III) and (IV), and
(a2) at least 5 wt.-%, preferably, from 25 to 95 wt.-%, most preferably from 50 to 90 wt-%, based on the total weight of the premix, of at least one active ingredient selected from the group of water-soluble and/ or fat-soluble vitamins, trace and/ or macro minerals, amino acids as well as mixtures thereof, and
(a3) 0 to 15 wt.-%, preferably 0 to 10 wt.-%, most preferably 0 to 5 wt.-%, based on the total weight of the premix, of edible oil.

The term 'premix consisting essentially of' indicates that the addition of all wt-% of the listed ingredients of the premix adds up to 100 wt.-% with the proviso, however, that it cannot be excluded that small amount of impurities or water (moisture) may be present in the premix according to the present invention such as e.g. in amounts of less than 7 wt.-%, preferably less than 5 wt.-%, more preferably less than 3 wt.-%, which impurities/ water (moisture) are introduced via the respective raw materials or processes used and which are not added separately.

Particularly suitable fat-soluble vitamins to be used in the premix according to the present invention are vitamin A, vitamin D3, vitamin E, and vitamin K, e.g. vitamin K3, preferably vitamin A and Vitamin E.

Particularly suitable water-soluble vitamins encompass vitamin B12, biotin and choline, vitamin B1, vitamin B2, vitamin B6, niacin, folic acid and panthothenate, e.g. Ca-D-panthothenate as well as mixtures thereof.

The amount (total) of the water-soluble and/ or fat-soluble vitamins and/ or amino acids in the in the active ingredient (a2) is preferably selected in the range from 0.00001 to 10 wt.-%, preferably in the range from 0.0001 to 5 wt.-%, most preferably in the range from 0.001 to 3 wt.-%, based on the total weight of the active ingredients (a2).

Particularly suitable trace minerals to be used in the premix according to the present invention are manganese (e.g. in the form of manganese oxide), zinc (e.g. in the form of zinc oxide), iron (e.g. in the form of iron sulphate), copper (e.g. in the form of copper sulphate), iodine (e.g. in the form of sodium iodine), selenium, and cobalt as well as mixtures thereof.

The amount (total) of the trace minerals in the in the active ingredient (a2) is preferably selected in the range from 0.1 to 10 wt.-%, preferably in the range from 0.5 to 7 wt.-%, most preferably in the range from 1 to 5 wt.-%, based on the total weight of the active ingredients (a2).

Particularly suitable macro minerals according to the present invention encompass calcium (e.g. in the form of limestone and calcium (mono, di or triphosphate), magnesium, phosphorus and sodium (e.g. in the form of sodium chloride) as well as mixtures thereof.

The amount of the macro mineral in the active ingredient (a2) is preferably selected in the range from 20 to 95 wt.-%, preferably in the range from 50 to 90 wt.-%, most preferably 60 to 80 wt.-%, based on the total weight of the active ingredients (a2).

The term 'edible oil' refers to oils commonly used in feed applications. Preferred edible oils to be used in the premix according to the present invention are canola oil, corn oil, rapeseed oil, sunflower oil, middle chain triglyceride (MCT), soy bean oil and glycerol as well as mixtures thereof. Even more preferable edible oils in all embodiments of the present invention are corn oil, rapeseed oil, sunflower oil, canola oil and or soy bean oil as well as mixtures thereof most preferred is soy bean oil.

All the above disclosed premixes can be used as such or admixed to feed products.

Additionally, all the above disclosed premixes can be used in the production of further feed products.

In a further embodiment, the present invention relates to the use of a beadlet according to the present invention, with all the definitions and preferences as given herein to improve the retention of a compound of formula (I), in particular in a mineral premix. Preferably, the retention of the compound of formula (I) is at least 80 %, preferably at least 85 % most preferably at least 90 % such as in particular at least 95 %.

In another embodiment, the present invention relates to a method of improving the retention (i.e. reducing the evaporation) of a compound of formula (I), said method comprising the step of preparing a beadlet according to the present invention with all the definitions and preferences as given herein. Preferably, the retention of the compound of formula (I) is at least 80 %, preferably at least 85 % most preferably at least 90 % such as in particular at least 95 %.

In a further embodiment, the present invention relates to a method of improving the retention (i.e. reducing the evaporation) of a compound of formula (I) in a mineral premix, said method comprising the step of incorporating the compound of formula (I) into the premix in the form a beadlet according to the present invention such as in particular a beadlet (I), (II), (III) or (IV) with all the definitions and preferences as given herein.

Preferably, the mixture/ premix exhibits a retention of at least 80 %, preferably at least 85 % most preferably at least 90 % such as in particular at least 95 %.

The term 'retention' as used therein refers to a retention of the compound of formula (I) with all the definitions and preferences as given herein over a storage time of at least 4 weeks (reclosed (i.e. a bag which has been rolled twice for closure and then fixated with a clip) PE or aluminium bag; 25°C; 50 % relative humidity (r.H.)).

The following examples serve to illustrate the invention. The percentages are expressed in weight percentages and the temperatures are degrees Celsius, if not otherwise defined.

### Examples

### General information: HPLC method

Agilent High Performance Liquid Chromatography 1260 Infinity system, using an Aquasil C18, 150 x 3mm, 3µm column and detecting at 210 nm. The column oven was set to 23°C, the autosampler not temperature controlled. The mobile phase consisted of mobile phase A (940mL Milli-Q-water + 60ml acetonitrile + 1mL methane sulfonic acid) and mobile phase B (800ml Milli-Q-water + 200ml acetonitrile + 1mL methane sulfonic acid) which were used in gradient mode (0 min: 0 % B, 15 min: 0 % B, 15.5 min: 100 % B, 21 min: 100 % B, 21.5 min: 0 % B, 25 min: 0 % B (= end of run)) with a flow of 0.4 ml/min.

### Example 1: Preparation of powderous PDMN product forms

### 1. Propandiol mononitrate adsorbate (PDMN adsorbate)

To 80 g of silica (Newsil C50) placed on a beaker, are added 80 g of a 20 wt.-% propandiol mononitrate (PDMN) solution in propyleneglycol under gentle agitation at room temperature. After 5 minutes agitation, the adsorption is completed and a free-flowing powder is obtained (Reference). PDMN content in adsorbate 10 wt.-%.

### Propandiol mononitrate beadlets (PDMN beadlets)

### 1.1. Beadlet preparation using a 20 wt.-% PDMN solution in water

The matrix material (i.e. a 1:1 weight mixture of the respective maltodextrin (table 1) and OSA-starch) was dissolved in 1000 g of a 20 wt.-% PDMN aqueous solution in the concentration as given in table 1. The solution was sprayed together with fluidized starch using a pilot-scale beadlet tower (theoretical starch pick-up: -15 wt.-%). The obtained beadlets were separated from excess starch and dried in an external fluid-bed obtaining about 1200 g of dry powder having a final PDMN content as outlined in table 1.

**Table 1: Preparation of beadlets using a 20 wt.-% PDMN aqueous solution**

| PDMN beadlet | OSA starch | Maltodextrin | c (matrix) [wt.-%] | PDMN content [wt.%] |
|---|---|---|---|---|
| 1 | CAPSUL® HS | MD 2831 | 60 | 14 |
| 2 | CAPSUL® HS | MD 2831 | 53 | 16 |
| 3 | CAPSUL® HS | MD 2831 | 50 | 15 |
| 4 | CAPSUL® HS | MD 0508 | 46 | 20 |
| 5 | CAPSUL® HS | MD 0508 | 50 | 20 |
| 6 | CAPSUL® HS | MD 0508 | 53 | 17 |
| 7 | CAPSUL® HS | MD 0508 | 50 | 24 |
| 8 | Hi-Cap®100 | MD 2831 | 53 | 10* |

| | | | | |
|---|---|---|---|---|
| *high starch pick-up | | | | |

1.2. 2.2. Beadlet preparation using a 25 wt.-% PDMN solution in water 30 g of maltodextrin an 30 g of OSA starch were dissolved in 120 g of an aqueous solution of propandiol mononitrate (25 wt.-%). The obtained suspension was sprayed together with fluidized starch using a pilot-scale beadlet tower (theroretical starch/ silica pick-up: -15 wt.-%). The so-obtained beadlets were separated from excess starch/ silica and dried in an external fluid-bed obtaining about 94 g of dry, free flowing powder having a PDMN content of 26 wt.-%.

### Example 3: Retention of PDMN upon storage (storage stability of product form)

10 g of the respective Form as outlined in table 3 were stored in reclosed PE bags at 25°C under controlled atmosphere (50 % r.H.) for 3 months. Afterwards the remaining content of PDMN was determined by HPLC. The results (as relative concentration to the initial value set to 100%) are presented Table 3.

**Table 2: Storage stability**

| **#** | **Form** | **Retention after 3 months [wt.%]** |
|---|---|---|
| Reference | PDMN adsorbate | 82 |
| Invention-1 | PDMN Beadlet 1* | 87 |
| Invention-2 | PDMN Beadlet 2* | 89 |
| Invention-3 | PDMN Beadlet 8* | 93 |

| | | |
|---|---|---|
| *beadlet of table 1 | | |

As can be retrieved, the incorporation of PDMN into a beadlet improves its storage stability.

### Example 4: Retention of PDMN in a specific product form in mineral feed

In a comparative trial, a mineral premix consisting of vitamins (Rovimix AD3 1000/200 (0.1 wt.-%) & Rovimix E 50 Ads (1 wt.-%)), minerals (92.9 wt.-%) and 4.3 respectively 3.5 wt.-% of the respective PDMN formulation as outlined in table 3 was stored for 1, respectively 3 months in reclosed PE bags at 25°C under controlled atmosphere (50 % r.H). Afterwards the remaining content of PDMN was determined by HPLC. The results (as relative concentration to the initial value set to 100%) are presented Table 4.

**Table 3: Stability in mineral feed**

| **#** | **Form** | **Retention** | |
|---|---|---|---|
| | | **1 month** | **3 months** |
| Reference | PDMN adsorbate | 73% | 51 % |
| Invention-1 | PDMN Beadlet 1* | 88 % | 77 % |
| Invention-2 | PDMN Beadlet 2* | 96% | 77 % |

| | | | |
|---|---|---|---|
| *beadlet of table 1 | | | |

As can be retrieved from the data in table 3, the incorporation of PDMN beadlets into a mineral premix significantly improved the retention thereof upon storage compared to the incorporation of a PDMN adsorbate.

## Claims

1. A beadlet comprising
(i) 1 to 30 wt-%, based on the total weight of the beadlets, of at least one compound of formula (I) 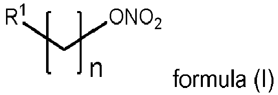 wherein
n is an integer from 1 to 15
R1 is selected from the group consisting of H, C₁-C₆alkyl, phenyl, -OH, -NH₂,-CN, -COOH, -O(C=O)R⁸, -NHC(=O)R⁸, SO₂NHR⁸, and -ONO₂, and
R⁸ is C₁-C₆alkyl, phenyl, pyridyl such as preferably 2-pyridyl with the proviso that when n is > 3 the hydrocarbon chain may be interrupted by -O or NH ,and
(ii) 30 to 98 wt-%, based on the total weight of the beadlets, of at least starch derivative, and
(iii) 1 to 60 wt.-%, based on the total weight of the beadlets, of a powder coating.

2. The beadlet according to claim 1, wherein the compound of formula (I) is propandiol mononitrate.

3. The beadlet according to any claim 1 or 2, wherein the at least starch derivate is chosen from the group consisting pregelatinised starches, acidic modified starches, oxidized starches, cross-linked starches, starch esters, starch ethers, dextrins and cationic starches.

4. The beadlet according to anyone of claims 1 to 3, wherein the at least one starch derivate is chosen from the group consisting of OSA starch and maltodextrin as well as mixtures thereof.

5. The beadlet according to anyone of claims 1 to 3, wherein the at least one starch derivates is a mixture of OSA starch and maltodextrin.

6. The beadlet according to claim 5, wherein the weight-ratio (w/w) of the OSA starch to the maltodextrin is selected in the range from 5:1 to 1:5, more preferably in the range of 2:1 to 1: 2, most preferably in the range of about 1:1.

7. The beadlet according to any of the preceding claims, wherein the powder coating is selected from the group consisting of native starches, silica, silicates or phosphates.

8. The beadlet according to any of the preceding claims, wherein the powder coating is selected from the group consisting of native starch, preferably corn starch, and silica as well as mixtures thereof.

9. The beadlet according to anyone of the preceding claims, wherein the ingredients (i) to (iii) sum up to 100 wt.-%.

10. Use of beadlets according to anyone of claims 1 to 9 in feed products.

11. Use according to claim 10, wherein the feed product is administered in the form of a tablet, a pellet and/ or a bolus.

12. Use according to claim 10, wherein the feed product is in the form of a mineral premix, consisting essentially of
(a1) at least 5 wt.-%, preferably from 5 to 20 wt.-%, most preferably from 10 to 15 wt.-%, based on the total weight of the premix, of beadlets according to anyone of claims 1 to 8, and
(a2) at least 5 wt.-%, preferably, from 25 to 95 wt.-%, most preferably from 50 to 90 wt-%, based on the total weight of the premix, of at least one active ingredient selected from the group of water-soluble and/ or fat-soluble vitamins, trace and/ or macro minerals, amino acids as well as mixtures thereof, and
(a3) 0 to 15 wt.-%, preferably 0 to 10 wt.-%, most preferably 0 to 5 wt.-%, based on the total weight of the premix, of edible oil.

13. A process for preparing beadlets, which beadlets comprise at least one a compound of formula (I) 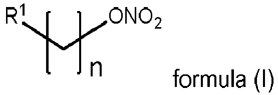 wherein
n is an integer from 1 to 15
R1 is selected from the group consisting of H, C₁-C₆alkyl, phenyl, -OH,-NH₂, -CN, -COOH, -O(C=O)R⁸, -NHC(=O)R⁸, SO₂NHR⁸, and -ONO₂, and
R⁸ is C₁-C₆alkyl, phenyl, pyridyl such as preferably 2-pyridyl with the proviso that when n is > 3 the hydrocarbon chain may be interrupted by -O or NH ,
said process comprising the step of:
(a) forming a solution of
(i) at least one compound of formula (I) and
(ii) at least one starch and/ or starch derivative, followed by
(b) converting the solution into a dry powder by spraying the solution into a collecting powder.

14. The process according to claim 13, wherein the solution is an aqueous solution.

15. Use of a beadlet according to anyone of claims 1 to 9 to improve the retention of a compound of formula (I) 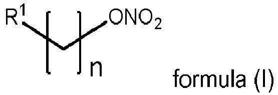 wherein
n is an integer from 1 to 15
R1 is selected from the group consisting of H, C₁-C₆alkyl, phenyl, -OH,-NH₂, -CN, -COOH, -O(C=O)R⁸, -NHC(=O)R⁸, SO₂NHR⁸, and -ONO₂, and
R⁸ is C₁-C₆alkyl, phenyl, pyridyl such as preferably 2-pyridyl
with the proviso that when n is > 3 the hydrocarbon chain may be interrupted by -O or NH
in a mineral premix.
